# EUROPEAN PATENT APPLICATION

(11) **EP 4 678 512 A1**
(43) Date of publication of application: **14.01.2026**
(21) Application number: 24201383.7
(22) Date of filing: 19.09.2024
(51) Int. Cl.: B62D 5/04, B60K 7/00

(54) **CORNER MODULE APPARATUS**

(30) Priority: 10.07.2024 KR 20240091185
(71) Applicant: Hyundai Mobis Co., Ltd., Gangnam-gu Seoul 06141 (KR)
(72) Inventor: HAN, Hyun Sik, 16891 Yongin-si, Gyeonggi-do (KR)
(74) Representative: Jung, Minkyu

(57) **Abstract**

A corner module apparatus includes a hub connected to a wheel, a main body spaced apart from the hub, a first motor arranged inside the main body, a second motor arranged inside the main body and spaced apart from the first motor, a drive member configured to be connected to the first motor and the hub and provide driving force to the wheel, and a steering member configured to be connected to the second motor and the hub and adjust a steering angle of the wheel.

## Description

### BACKGROUND

### FIELD

Exemplary embodiments of the present disclosure relate to a corner module apparatus, and more particularly, to a corner module apparatus configured to integrate drive, braking, steering and suspension systems.

### DISCUSSION OF THE BACKGROUND

In general, an electric vehicle refers to an eco-friendly vehicle with no emissions of exhaust gases. The electric vehicle is equipped with a high-voltage battery that supplies energy for driving, and a driving motor that generates rotational force from the power output from the high-voltage battery. The rotational power of the motor is transmitted to the wheels via a drive shaft, enabling the vehicle to drive.

In recent years, in-wheel motor vehicles, each of which has a motor embedded directly within the wheels so that the motor's power is transmitted directly to the wheel W, have gained attention due to advantages of reducing vehicle weight and decreasing energy loss in the power transmission process by removing intermediate power transmission devices such as reducers and differential gears. Furthermore, development is actively underway on the wheels configured to integrate not only a drive system but also braking, steering, and suspension systems.

The related art of the present disclosure is disclosed in Korean Patent Application Publication No. 10-2019-0041855 (published on April 23, 2019 and entitled "STEERING SYSTEM FOR IN-WHEEL MOTOR VEHICLE").

### SUMMARY

Various embodiments of the present disclosure are directed to a corner module apparatus capable of improving ride comfort and ensuring durability.

A corner module apparatus according to the present disclosure includes a hub connected to a wheel, a main body spaced apart from the hub, a first motor arranged inside the main body, a second motor arranged inside the main body and spaced apart from the first motor, a drive member configured to be connected to the first motor and the hub and provide driving force to the wheel, and a steering member configured to be connected to the second motor and the hub and adjust a steering angle of the wheel.

The drive member may include a drive shaft arranged between the first motor and the hub, a first connection arranged on one side of the drive shaft and connected to the first motor, and a second connection arranged on the other side of the drive shaft and connected to the hub.

The first connection and the second connection may be rotatably connected to the drive shaft.

The steering member may include a first steering body fixed to the main body, a second steering body configured to be fixed to a vehicle body and rotatably support the first steering body, a transmission gear configured to be connected to the second motor and rotate the first steering body relative to the second steering body, and a torque link configured to be connected to the first steering body and the hub and transmit rotational force of the first steering body to the hub.

The transmission gear may include a first worm gear arranged inside the first steering body and connected to the second motor, a first worm wheel engaged with the first worm gear, a second worm gear configured to rotate with the first worm wheel, and a second worm wheel fixed to the second steering body and engaged with the second worm gear.

A central axis of the first worm gear and a central axis of the first worm wheel may be arranged to intersect with each other.

A central axis of the second worm wheel may be arranged coaxially with a central axis of the second steering body.

The second worm gear may rotate around the central axis of the first worm wheel and revolve around the central axis of the second worm wheel.

The torque link may include a first transmission link connected to the first steering body, a second transmission link connected to the hub, a transmission joint configured to be arranged between the first transmission link and the second transmission link and rotatably support the second transmission link relative to the first transmission link.

The first transmission link may be rotatably connected to the first steering body.

The corner module apparatus may further include a strut connected to the hub and the first steering body and arranged flexibly along the central axis of the second steering body.

The central axis of the second steering body and a central axis of the wheel may be arranged offset from each other.

The corner module apparatus may further include a suspension arm configured to be arranged between the vehicle body and the hub and support the hub relative to the vehicle body.

The corner module apparatus may further include a stabilizer bar connected to the vehicle body and the suspension arm.

The corner module apparatus may further include an insulator fixed to the main body and arranged between the first motor and the second motor.

In the corner module apparatus, as the main body and the first steering body are supported by the second steering body fixed to the vehicle body, the size of the unsprung mass is reduced, thereby ensuring improved ride comfort and durability.

The corner module apparatus may simplify the structure by installing both the first motor and second motor in the main body.

The corner module apparatus ensures high reliability by utilizing the MacPherson strut structure used in existing vehicles, and facilitates the integration of additional components.

In the corner module apparatus, the steering member transmits steering force through a worm gear structure to prevent reverse rotation of the second motor caused by loads applied in the reverse direction from the road surface, and to prevent the steering angle of the wheel from being arbitrarily changed during sudden acceleration or sudden braking.

In the corner module apparatus, the height of a reducer used for transmitting steering force may be lowered, and space utilization may be enhanced by using a worm gear and worm wheel with intersecting rotational axes.

In the corner module apparatus, the strut is arranged offset relative to the central axis of the wheel, thereby freeing up installation space for the drive member.

### BRIEF DESCRIPTION OF THE DRAWINGS

FIG. 1 is a perspective view schematically showing an installed state of a corner module apparatus according to an embodiment of the present disclosure.
FIG. 2 is a perspective view schematically showing a configuration of a corner module apparatus according to an embodiment of the present disclosure.
FIG. 3 is a perspective view showing a configuration of a corner module apparatus according to an embodiment of the present disclosure from a different perspective than in FIG. 2.
FIG. 4 is a side view schematically showing a configuration of a corner module apparatus according to an embodiment of the present disclosure.
FIG. 5 is a front view schematically showing a configuration of a corner module apparatus according to an embodiment of the present disclosure.
FIG. 6 is an exploded perspective view schematically showing a configuration of a corner module apparatus according to an embodiment of the present disclosure.
FIG. 7 is a view schematically showing an installed state of a first motor and a second motor according to an embodiment of the present disclosure.
FIG. 8 is an enlarged view schematically showing an appearance of a steering member according to an embodiment of the present disclosure.
FIG. 9 is an enlarged view schematically showing an internal structure of a steering member according to an embodiment of the present disclosure.
FIG. 10 is an exploded perspective view schematically showing an internal structure of a steering member according to an embodiment of the present disclosure.
FIG. 11 is an enlarged view schematically showing a configuration of a suspension arm and a stabilizer bar according to an embodiment of the present disclosure.
FIGS. 12 and 13 are views schematically showing an operation state of a corner module apparatus according to an embodiment of the present disclosure.

### DETAILED DESCRIPTION OF THE ILLUSTRATED EMBODIMENTS

Embodiments of a corner module apparatus according to the present disclosure will be described hereinafter with reference to the accompanying drawings.

In this process, the thickness of lines and the size of components illustrated in the drawing may be exaggerated for clarity and convenience of description. In addition, the terms used below are defined in consideration of the functions thereof in the present disclosure and may vary depending on the intention of a user or an operator or common practice. Therefore, these terms should be contextually defined in light of the present specification.

Furthermore, in this specification, when a part is described as being "connected (or linked)" to another part, this includes not only cases where it is "directly connected (or linked)," but also cases where it is "indirectly connected (or linked)" to another part with an intermediate member in between. When a part is referred to as "comprising (or having)" a certain element, it means that, unless specifically stated otherwise, it does not exclude other elements but may further "comprise (or have)" other elements.

Throughout this specification, the same reference numerals may refer to the same elements. Although the same or similar reference numerals may not be mentioned or described in a specific drawing, those reference numerals may be described with reference to other drawings. Even if there are parts in a specific drawing where reference numerals are not indicated, those parts may be described based on other drawings. Furthermore, the number, shape, size, and relative differences in size of the detailed elements included in the drawings of the present disclosure are set for ease of understanding and are not intended to limit embodiments, which may be implemented in various forms.

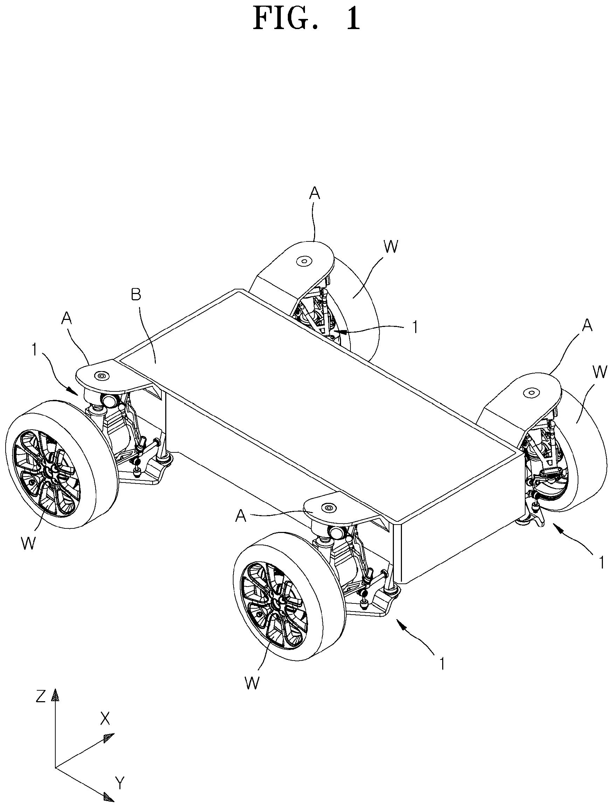

FIG. 1 is a perspective view schematically showing an installed state of a corner module apparatus according to an embodiment of the present disclosure.

Referring to FIG. 1, a corner module apparatus 1 according to the present embodiment may be installed between a vehicle body B and a wheel W and perform operations such as driving, braking, steering, suspension, and the like in general.

A plurality of corner module apparatuses 1 may be provided. The plurality of corner module apparatuses 1 may be individually connected to each wheel W. The plurality of corner module apparatuses 1 may independently perform operations such as driving, braking, steering, and suspension for each wheel W. FIG. 1 illustrates an example where four corner module apparatuses 1 are formed, but the number of corner module apparatuses 1 is not limited to this and the design may be variously modified depending on the number of wheels W.

The vehicle body B may be exemplified by various types of structures that form a framework of the vehicle, such as a chassis frame and a sub-frame. FIG. 1 illustrates an example of the vehicle body B having the shape of a rectangular frame, but the shape of the vehicle body B is not limited to this and the design may be modified to various shapes.

The vehicle body B may include a steering bracket A that rotatably supports the corner module apparatus 1. The steering bracket A according to the present embodiment may have a plate shape extending upward from sides of the vehicle body B. A plurality of steering brackets A may be provided. The number of steering brackets A may be the same as the number of corner module apparatuses 1. Each steering bracket A may individually support a different corner module apparatus 1.

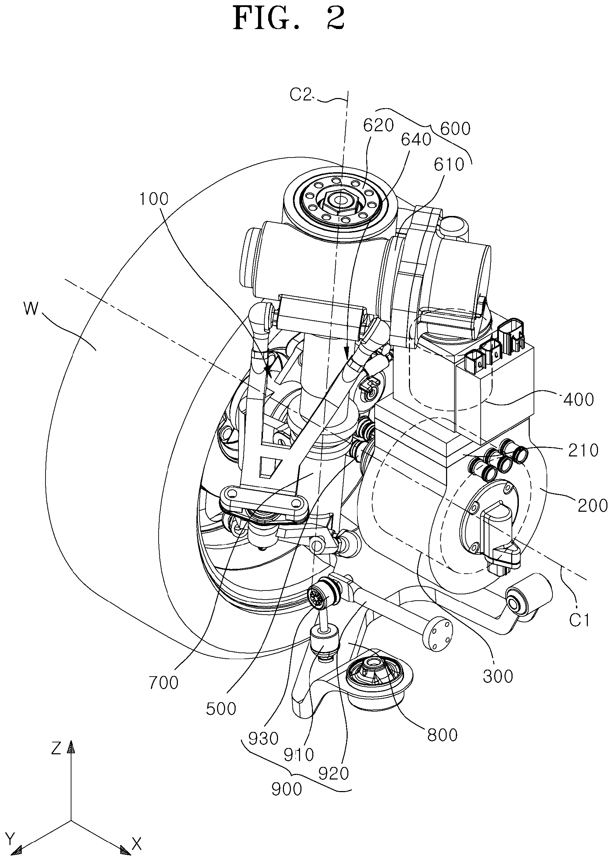

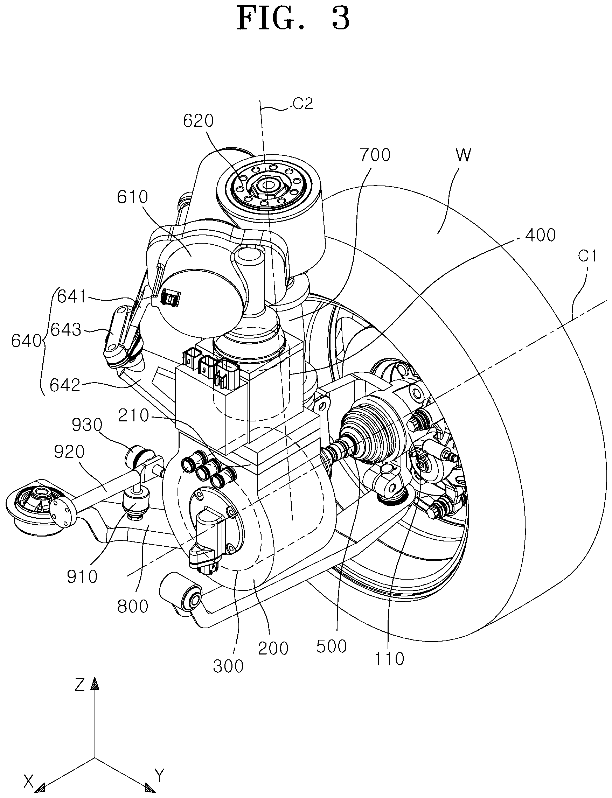

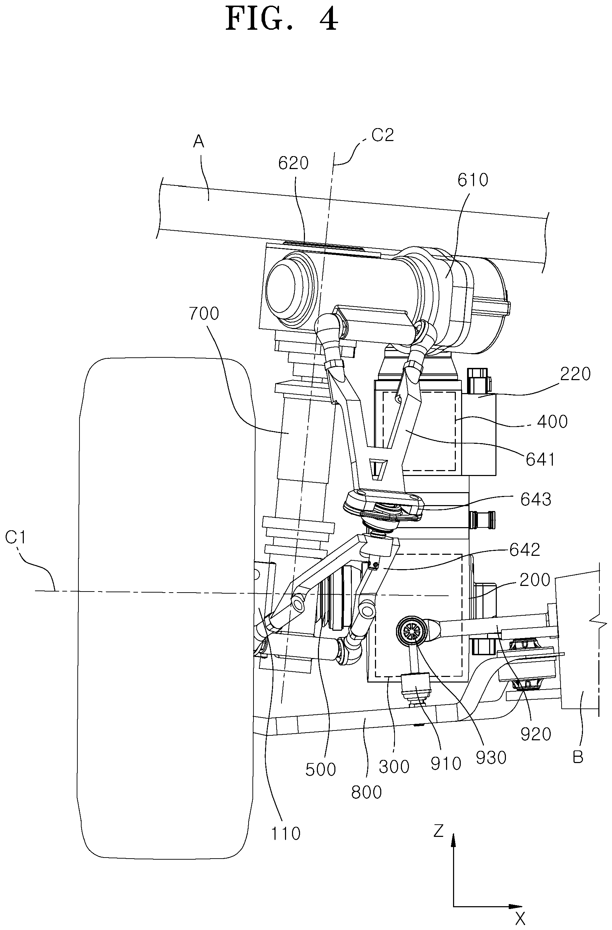

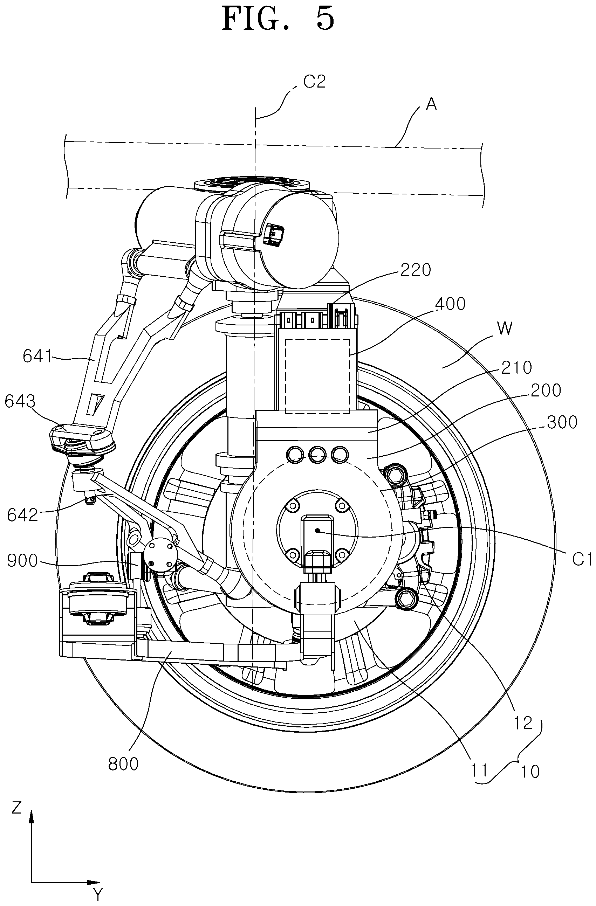

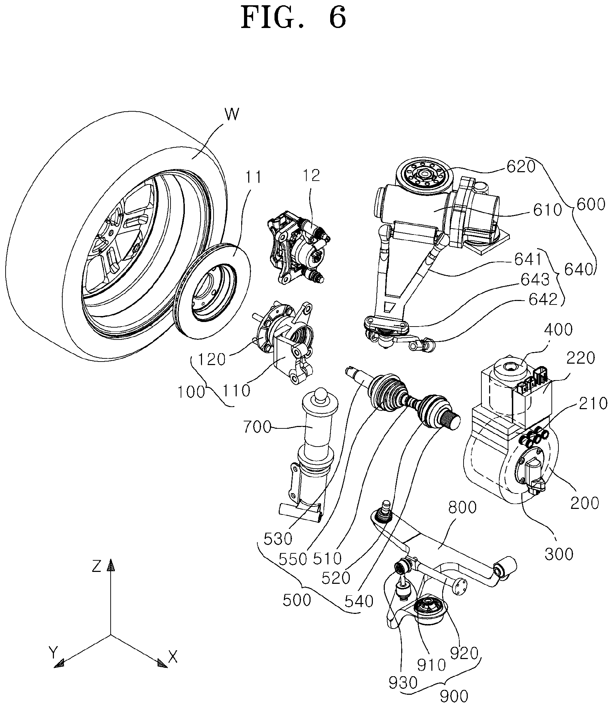

FIG. 2 is a perspective view schematically showing a configuration of a corner module apparatus according to an embodiment of the present disclosure. FIG. 3 is a perspective view showing a configuration of a corner module apparatus according to an embodiment of the present disclosure from a different perspective than in FIG. 2. FIG. 4 is a side view schematically showing a configuration of a corner module apparatus according to an embodiment of the present disclosure. FIG. 5 is a front view schematically showing a configuration of a corner module apparatus according to an embodiment of the present disclosure. FIG. 6 is an exploded perspective view schematically showing a configuration of a corner module apparatus according to an embodiment of the present disclosure.

Referring to FIGS. 2 to 6, a corner module apparatus 1 according to the embodiment includes a hub 100, a main body 200, a first motor 300, a second motor 400, a drive member 500, and a steering member 600.

The hub 100 may be connected to a wheel W. The hub 100 may rotatably support the wheel W and provide mechanical connection of the drive member 500 and the steering member 600 to the wheel W.

The hub 100 according to the present embodiment may include a knuckle 110 and a wheel bearing 120.

The knuckle 110 may define a general outline of the hub 100 and support the wheel bearing 120.

The knuckle 110 according to the present embodiment may be arranged between the wheel W and a vehicle body B. The knuckle 110 may be made of metal, such as steel, to ensure sufficient rigidity. The specific shape of the knuckle 110 is not limited to the shapes shown in FIGS. 2 to 6 and the design may be modified to various shapes that overall support the wheel bearing 120, drive member 500, and steering member 600 between the wheel W and the vehicle body B.

The wheel bearing 120 may rotatably support the wheel W relative to the knuckle 110.

The wheel bearing 120 according to the present embodiment may have various types of radial bearing shapes including a fixed part (not shown) fixed to the knuckle 110, a rotation part (not shown) connected to the wheel W, and a rolling element (not shown) arranged between the fixed part and the rotation part and rotatably supporting the rotation part relative to the fixed part. A central axis of the wheel bearing 120 may be arranged coaxially with a central axis C1 of the wheel W. In the embodiment, the central axis C1 of the wheel W may be arranged parallel to the X-axis shown in FIGS. 2 to 6.

The wheel bearing 120 may rotatably support the wheel W around the central axis C1 of the wheel W. When the wheel bearing 120 rotates, the wheel W may rotate clockwise or counterclockwise around the central axis C1.

Inside the wheel W, a brake disc 11 that rotates with the rotation part of the wheel bearing 120 and a caliper brake 12 that is fixed to the knuckle 110 and selectively brought into contact with the brake disc 11 to generate braking force may be further installed.

The main body 200 may be spaced apart from the hub 100 and provide a space in which the first motor 300 and the second motor 400 described below are accommodated.

The main body 200 according to the present embodiment may be arranged between the knuckle 110 and the vehicle body B. The main body 200 may be arranged to face the knuckle 110 along the central axis C1 of the wheel W. Specifically, the wheel W, knuckle 110, and main body 200 may be sequentially arranged toward the vehicle body B along the central axis C1 of the wheel W. The main body 200 may be formed in a box shape with an empty interior. The specific shape of the main body 200 is not limited to the shapes shown in FIGS. 2 to 6 and the design may be modified to various shapes that provide a space in which the first motor 300 and the second motor 400 are accommodated.

The first motor 300 and the second motor 400 may be arranged inside the main body 200. The first motor 300 and the second motor 400 may be configured to function to generate rotational force for driving the wheel W and steering the wheel W, respectively.

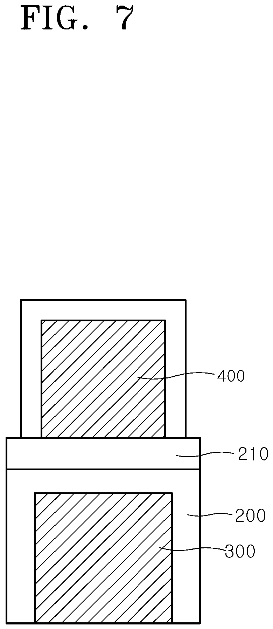

FIG. 7 is a view schematically showing an installed state of a first motor and a second motor according to an embodiment of the present disclosure.

Referring to FIGS. 2 to 7, a first motor 300 and a second motor 400 according to the embodiment may be exemplified by various types of electric motors capable of generating rotational force when supplied with power. The first motor 300 and the second motor 400 may be spaced apart along the vertical direction inside a main body 200. For example, the first motor 300 may be arranged at a lower side of the main body 200, and the second motor 400 may be arranged at an upper side of the main body 200. The first motor 300 and the second motor 400 may be directly fixed to an inner surface of the main body 200, or alternatively, may be fixed inside the main body 200 via a separate bracket or the like.

An output shaft of the first motor 300 and an output shaft of the second motor 400 may be arranged to intersect with each other. For example, the output shaft of the first motor 300 may be arranged parallel to a central axis C1 of a wheel W. The output shaft of the second motor 400 may be arranged parallel to a central axis C2 of a second steering body 620 of a steering member 600 described below.

An insulator 210 may be arranged between the first motor 300 and the second motor 400 to electrically isolate the first motor 300 and the second motor 400. Accordingly, the insulator 210 may prevent electrical interference between the first motor 300 and the second motor 400 installed in the same space.

The insulator 210 according to the present embodiment may have a partition shape that divides the internal space of the main body 200 into upper and lower parts. The insulator 210 may be fixed to the main body 200 by various types of joining methods such as bonding, press-fitting, bolting, and fitting. The lower surface of the insulator 210 may be arranged to face the first motor 300, and the upper surface of the insulator 210 may be arranged to face the second motor 400. The insulator 210 may be made of an electrically insulating material such as rubber or synthetic resin.

A control module 220 for controlling an operation of the first motor 300 and the second motor 400 may be installed inside or outside the main body 200 according to the present embodiment. The control module 220 may be electrically connected to the first motor 300 and the second motor 400. The control module 220 may control the operation of the first motor 300 and the second motor 400 based on data detected by various sensors.

The control module 220 according to the present embodiment may be configured to include at least one of an electronic control unit (ECU), a central processing unit (CPU), a processor, or a system on chip (SoC), and control a plurality of hardware or software components by driving an operating system or application, and perform various data processing and operations. The control module 220 may be configured to execute at least one command stored in memory and save the resulting data in the memory. The control module 220 may be configured to include at least one of various devices capable of executing communication protocols, such as radio frequency (RF), wireless fidelity (Wi-Fi), Bluetooth, Zigbee, and near field communication (NFC) to receive data detected by sensors or input signals generated by a driver's terminal or various input devices.

A drive member 500 may be connected to the first motor 300 and a hub 100. The drive member 500 may provide driving force to the wheel W in conjunction with rotational force generated by the first motor 300. In other words, the drive member 500 may be configured to function to rotate the wheel W around the central axis C1 due to the rotational force generated by the first motor 300.

The drive member 500 according to the present embodiment may include a drive shaft 510, a first connection 520, and a second connection 530.

The drive shaft 510 may define an outline of a central portion of the drive member 500 and provide overall support for the first connection 520 and the second connection 530.

The drive shaft 510 according to the present embodiment may be arranged between the first motor 300 and the hub 100, more specifically, a knuckle 110. Both ends of the drive shaft 510 may be arranged to face the first motor 300 and the knuckle 110, respectively. A central axis of the drive shaft 510 may be arranged parallel to a central axis C1 of the wheel W or may be arranged at an inclination relative to a central axis of the wheel W.

The first connection 520 may be arranged on one side of the drive shaft 510 and connected to the first motor 300. The first connection 520 may be configured to function to transmit the rotational force generated by the first motor 300 to the drive shaft 510.

The first connection 520 according to the present embodiment may be arranged between one end of the drive shaft 510, arranged toward the first motor 300, and the output shaft of the first motor 300.

One side of the connection 520 may be connected to one end of the drive shaft 510. For example, one side of the first connection 520 may be rotatably connected to one end of the drive shaft 510 via a constant velocity joint or the like.

The other side of the first connection 520 may be connected to the output shaft of the first motor 300. For example, the other side of the first connection 520 may be connected to the output shaft of the first motor 300 by a spline connection. Accordingly, when the first motor 300 is driven, the drive shaft 510 and the first connection 520 may rotate clockwise or counterclockwise around their respective central axes.

The second connection 530 may be arranged on the other side of the drive shaft 510 and connected to the hub 100. The second connection 530 may be configured to function to ultimately transmit the rotational force generated by the first motor 300 to the wheel W.

The second connection 530 according to the present embodiment may be arranged between the other end of the drive shaft 510, arranged toward the hub 100, and the knuckle 110. A central axis of the second connection 530 may be arranged coaxially with the central axis C1 of the wheel W.

One side of the second connection 530 may be connected to the other end of the drive shaft 510. For example, one side of the second connection 530 may be rotatably connected to the other end of the drive shaft 510 via a constant velocity joint or the like.

The other side of the second connection 530 may be inserted into a central portion of the knuckle 110 and connected to a rotation part of a wheel bearing 120. For example, the other side of the second connection 530 may be connected to the rotation part of the wheel bearing 120 by a spline connection. Accordingly, when the first motor 300 is driven, the second connection 530 may rotate with the drive shaft 510 to rotate the wheel W clockwise or counterclockwise.

The drive member 500 according to the present embodiment may further include a first boot 540 and a second boot 550.

The first boot 540 may be arranged to surround the drive shaft 510 and the first connection 520. The first boot 540 may be configured to function to block the entry of water and foreign substances at a connection area between the drive shaft 510 and the first connection 520.

The first boot 540 according to the present embodiment may have a tubular shape arranged to surround the connection area between the drive shaft 510 and the first connection 520. Both ends of the first boot 540 may be fixed to the outer surfaces of the drive shaft 510 and the first connection 520, respectively.

The first boot 540 may be configured to be elastically deformable. For example, the first boot 540 may have a flexible corrugated tube shape along the longitudinal direction thereof. Accordingly, the first boot 540 may accommodate angular displacement between the drive shaft 510 and the first connection 520 through the first boot's own elastic deformation.

The second boot 550 may be arranged to surround the drive shaft 510 and the second connection 530. The second boot 550 may be configured to function to block the entry of water and foreign substances at a connection area between the drive shaft 510 and the second connection 530.

The second boot 550 according to the present embodiment may have a tubular shape arranged to surround the connection area between the drive shaft 510 and the second connection 530. Both ends of the second boot 550 may be fixed to the outer surfaces of the drive shaft 510 and the second connection 530, respectively.

The second boot 550 may be configured to be elastically deformable. For example, the second boot 550 may have a flexible corrugated tube shape along the longitudinal direction thereof. Accordingly, the second boot 550 may accommodate angular displacement between the drive shaft 510 and the second connection 530 through the second boot's own elastic deformation.

The steering member 600 may be connected to the second motor 400 and the hub 100. The steering member 600 may adjust a steering angle of the wheel W in conjunction with rotational force generated by the second motor 400.

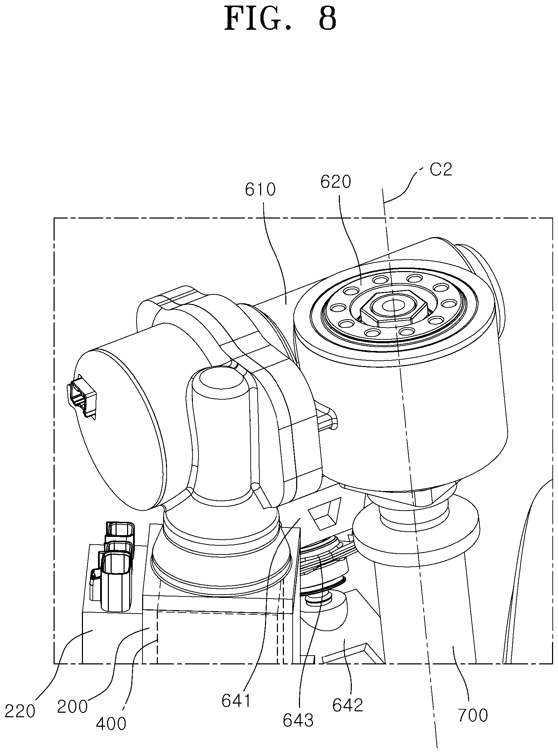

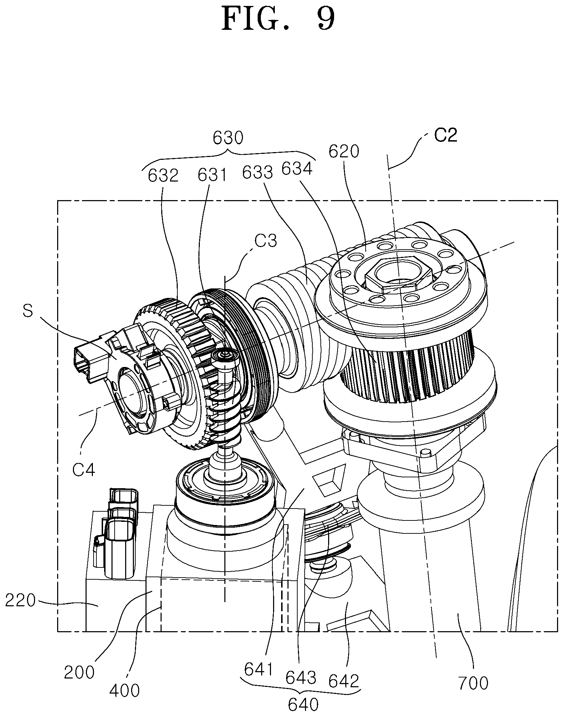

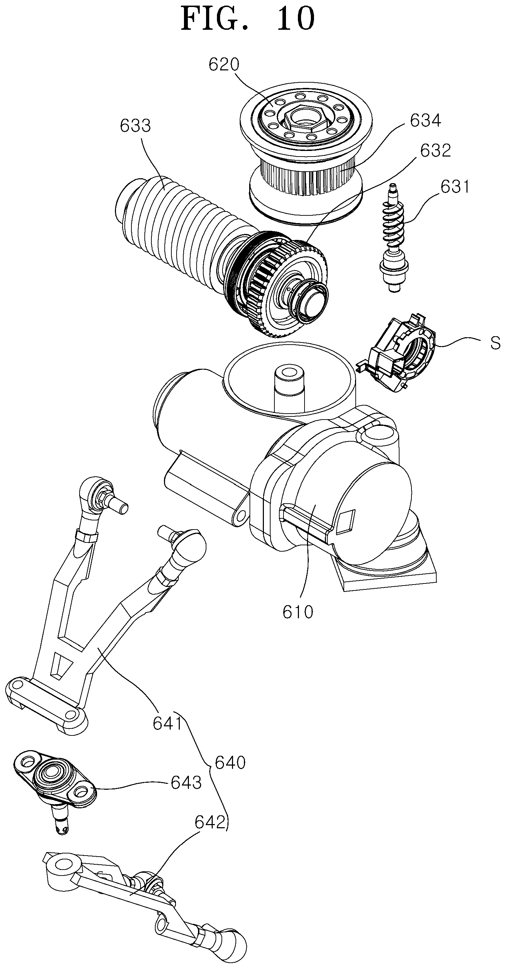

FIG. 8 is an enlarged view schematically showing an appearance of a steering member according to an embodiment of the present disclosure. FIG. 9 is an enlarged view schematically showing an internal structure of a steering member according to an embodiment of the present disclosure. FIG. 10 is an exploded perspective view schematically showing an internal structure of a steering member according to an embodiment of the present disclosure.

Referring to FIGS. 2 to 10, a steering member 600 according to the present embodiment may include a first steering body 610, a second steering body 620, a transmission gear 630, and a torque link 640.

The first steering body 610 may be fixed to a main body 200 and provide a space in which the transmission gear 630 is accommodated.

The first steering body 610 according to the present embodiment may be formed in a cylindrical shape with an empty interior. The first steering body 610 may be arranged between the top of the main body 200 and a steering bracket A. The first steering body 610 may be fixed to the top of the main body 200. The first steering body 610 may be fixed to the main body 200 by various types of joining methods such as welding, bolting, and fitting. The specific shape of the first steering body 610 is not limited to the shapes shown in FIGS. 8 and 10 and the design may be modified to various shapes that are fixed to the main body 200.

The second steering body 620 may be fixed to a vehicle body B and rotatably support the first steering body 610. The second steering body 620 may be configured to function to form a steering axis of a corner module apparatus 1.

The second steering body 620 according to the present embodiment may be arranged inside the first steering body 610. The top of the second steering body 620 may pass through the first steering body 610 and be exposed to the external space of the first steering body 610. The top of the second steering body 620 may be fixed to the steering bracket A. The top of the second steering body 620 may be fixed to the main body 200 by various types of joining methods such as welding, bolting, and fitting.

The second steering body 620 may have a cylindrical shape with a cross-sectional area that gradually increases from a central portion toward both ends. A central axis C2 of the second steering body 620 may be arranged to face the ground from the steering bracket A. For example, the central axis C2 of the second steering body 620 may be arranged at a predetermined angle relative to the Z-axis shown in FIGS. 2 to 6.

The central axis C2 of the second steering body 620 and a central axis C1 of a wheel W may be arranged offset from each other. More specifically, the central axis C2 of the second steering body 620 and the central axis C1 of the wheel W may be two different straight lines in a twisted arrangement. For example, the central axis of the second steering body 620 may be spaced a predetermined distance apart from the central axis C1 of the wheel W without intersecting each other on the XY plane shown in FIGS. 2 to 6.

The first steering body 610 according to the present embodiment may be installed in the second steering body 620 so as to rotate clockwise or counterclockwise around the central axis C2 of the second steering body 620. A bearing (not shown) may be arranged between the first steering body 610 and the second steering body 620 to guide a relative rotation of the first steering body 610 to the second steering body 620. As the first steering body 610 is integrally fixed to the main body 200, when the first steering body 610 rotates, the main body 200 may rotate around the central axis C2 of the second steering body 620 with the first steering body 610.

The transmission gear 630 may be connected to the second motor 400 and rotate the first steering body 610 relative to the second steering body 620. In other words, the transmission gear 630 may be configured to function to transmit the rotational force generated by the second motor 400 to the first steering body 610.

The transmission gear 630 according to the present embodiment may include a first worm gear 631, a first worm wheel 632, a second worm gear 633, and a second worm wheel 634.

The first worm gear 631 may be arranged inside the first steering body 610 and connected to the second motor 400.

The first worm gear 631 according to the present embodiment may have a rod shape with worm threads formed on the outer circumferential surface. The first worm gear 631 may be formed integrally with an output shaft of the second motor 400, or alternatively, may be manufactured separately from the second motor 400 and connected to the output shaft of the second motor 400. The first worm gear 631 may extend from the main body 200 toward the internal space of the first steering body 610. A central axis C3 of the first worm gear 631 may be arranged coaxially with the output shaft of the second motor 400. When the second motor 400 is driven, the first worm gear 631 may rotate clockwise or counterclockwise around the central axis C3 of the first worm gear 631.

The first worm wheel 632 may be engaged with the first worm gear 631.

The first worm wheel 632 according to the present embodiment may have a disc shape with gear teeth formed on the outer circumferential surface. The first worm wheel 632 may be arranged inside the first steering body 610.

A central axis C4 of the first worm wheel 632 may be arranged to intersect with the central axis C2 of the second steering body 620 and the central axis C3 of the first worm gear 631. For example, the central axis C4 of the first worm wheel 632 may be arranged perpendicular to the central axis C2 of the second steering body 620 and the central axis C3 of the first worm gear 631. The central axis C2 of the second steering body 620 and the central axis C3 of the first worm gear 631 may be arranged so as not to be parallel to each other within a range perpendicular to the central axis C4 of the first worm wheel 632, or alternatively, may be arranged parallel to each other. Accordingly, the first worm gear 631 and the first worm wheel 632 may increase space utilization by reducing the height of the transmission gear 630 for transmitting the rotational force generated by the second motor 400 to the second steering body 620.

Gear teeth formed on the outer circumferential surface of the first worm wheel 632 may be engaged with the worm threads of the first worm gear 631. When the first worm gear 631 rotates, the first worm wheel 632 may rotate clockwise or counterclockwise around the central axis C4 of the first worm wheel 632. Accordingly, the transmission gear 630 may prevent reverse rotation of the second motor 400 caused by the rotational force input in the reverse direction from the first worm wheel 632 to the first worm gear 631, thereby preventing a steering angle of the wheel W from being arbitrarily changed during sudden acceleration or sudden braking.

The second worm gear 633 may rotate with the first worm wheel 632.

The second worm gear 633 according to the present embodiment may have a rod shape with worm threads formed on the outer circumferential surface. The pitch and curvature of the worm threads formed on the outer circumferential surface of the second worm gear 633 may be the same as those of the worm threads formed on the outer circumferential surface of the first worm gear 631, or alternatively, may be differently formed.

The central axis of the second worm gear 633 may be arranged coaxially with the central axis C4 of the first worm wheel 632. The one end of the second worm gear 633 may be connected to the first worm wheel 632. Accordingly, when the first worm wheel 632 rotates, the second worm gear 633 may rotate around the central axis C4 of the first worm wheel 632 with the same angular velocity as the first worm wheel 632. The second worm gear 633 may be formed integrally with the first worm wheel 632, or alternatively, may be manufactured separately from the first worm wheel 632 and connected to the first worm wheel 632. The outer circumferential surface of the second worm gear 633 may be arranged to face the outer circumferential surface of the second steering body 620 with a predetermined distance therebetween.

The second worm wheel 634 may be fixed to the second steering body 620 and engaged with the second worm gear 633.

The second worm wheel 634 according to the present embodiment may have a cylindrical shape with gear teeth formed on the outer circumferential surface. The second worm wheel 634 may be fixed to a central portion of the second steering body 620. The second worm wheel 634 may be formed integrally with the second steering body 620, or alternatively, may be manufactured separately from the second steering body 620 and connected to the second steering body 620.

The central axis of the second worm wheel 634 may be arranged coaxially with the central axis C2 of the second steering body 620. The central axis of the second worm wheel 634 may be arranged perpendicular to the central axis of the second worm gear 633.

The outer circumferential surface of the second worm wheel 634 may be engaged with the central axis of the second worm gear 633. Accordingly, the transmission gear 630 may prevent reverse rotation of the second motor 400 not only through the first worm wheel 632 and the first worm gear 631, but also through the second worm gear 633 and the second worm wheel 634, thereby effectively preventing the steering angle of the wheel W from being arbitrarily changed during sudden acceleration or sudden braking.

As the second steering body 620 is fixed to the steering bracket A, when the second worm gear 633 rotates, the second worm wheel 634 may be fixed without rotating around the central axis C2 of the second steering body 620.

Accordingly, when the second motor 400 is driven, the second worm gear 633 may rotate around the central axis C3 of the first worm wheel 632 and revolve around the central axis C2 of the second steering body 620 at the same time. Accordingly, when the second motor 400 is driven, the first worm wheel 632, the first worm gear 631, and the second motor 400, sequentially connected to the second worm gear 633, may revolve around the central axis C2 of the second steering body 620, and the main body 200 supporting the second motor 400 and the first steering body 610 integrally fixed to the main body 200 may also revolve around the central axis C2 of the second steering body 620.

An angle sensor S for measuring the steering angle of the wheel W may be connected to the transmission gear 630. The angle sensor S according to the present embodiment may be an angle measurement means using at least one of a Hall sensor method utilizing the Hall effect, a magnetic induction method, or an optical method. The angle sensor S may be arranged inside the first steering body 610. The angle sensor S may be connected to the first worm wheel 632. However, the angle sensor S is not limited to this and may also be connected to the first worm gear 631 or the second worm gear 633. The angle sensor S may be connected to the control module 220 either wirelessly or via a wired connection and transmit measured data to the control module 220.

The torque link 640 may be connected to the first steering body 610 and the hub 100. The torque link 640 may be configured to function to transmit rotational force of the first steering body 610 to the hub 100 and adjust the steering angle of the wheel W connected to the hub 100.

The torque link 640 according to the present embodiment may include a first transmission link 641, a second transmission link 642, and a transmission joint 643.

The first transmission link 641 may define an outline of one side of the torque link 640 and be connected to the first steering body 610.

The first transmission link 641 according to the present embodiment may be formed in various types of link arm shapes. One end of the first transmission link 641 may be rotatably connected to the outer surface of the first steering body 610 via components such as a bushing or bearing. In this case, the first transmission link 641 may be rotatably connected to the first steering body 610 around an axis in a direction that intersects with the central axis C2 of the second steering body 620. Accordingly, the first transmission link 641 may rotate around the central axis C2 of the second steering body 620 with the first steering body 610 during steering action of the wheel W, thereby transmitting steering force to the wheel W. The first transmission link 641 may rotate relative to the first steering body 610 during suspension operation of the wheel W, thereby absorbing shock transmitted from the road surface to the wheel W.

The second transmission link 642 may define an outline of the other side of the torque link 640 and be connected to the hub 100.

The second transmission link 642 according to the present embodiment may be formed in various types of link arm shapes. One end of the second transmission link 642 may be rotatably connected to a knuckle 110 via components such as a bushing or bearing. One end of the second transmission link 642 may be directly and rotatably connected to the knuckle 110, or alternatively, may be indirectly connected to the knuckle 110 via a separate structure such as a strut 700 described below. In this case, the second transmission link 642 may be rotatably connected to the knuckle 110 around an axis in a direction that intersects with the central axis C2 of the second steering body 620. Accordingly, the second transmission link 642 may rotate around the central axis C2 of the second steering body 620 with the knuckle 110 during steering action of the wheel W, thereby transmitting steering force to the wheel W. The second transmission link 642 may rotate relative to the knuckle 110 during suspension operation of the wheel W, thereby absorbing shock transmitted from the road surface to the wheel W.

The transmission joint 643 may be arranged between the first transmission link 641 and the second transmission link 642 and rotatably support the first transmission link 641 and the second transmission link 642 relative to each other. In other words, the transmission joint 643 may be configured to function not only to transmit the rotational force input to the first transmission link 641 to the second transmission link 642 but also to absorb a torsional force generated between the first transmission link 641 and the second transmission link 642 during suspension operation and steering action of the wheel W.

Both sides of the transmission joint 643 according to the present embodiment may be connected to the respective other ends of the first transmission link 641 and the second transmission link 642. The transmission joint 643 may include a ball joint capable of multi-axis rotation. Accordingly, the transmission joint 643 may allow angular changes of the second transmission link 642 relative to the first transmission link 641 in all directions, thereby facilitating smoother suspension operation and steering action of the wheel W.

The corner module apparatus 1 according to the present embodiment may further include the strut 700.

The strut 700 may be connected to the hub 100 and the first steering body 610. The strut 700 may be arranged flexibly along the central axis C2 of the second steering body 620. The strut 700 may be configured to function to adjust the length along the central axis C2 of the second steering body 620 and absorb shock applied to the wheel W during suspension operation of the wheel W, such as bumps and rebounds.

The strut 700 according to the present embodiment may be exemplified by various types of shock absorbers that are filled with damping fluid therein and are adjustable in length. The damping fluid filled in the strut 700 may include at least one of oil or air. The strut 700 may be a conventional shock absorber in which a damping force of the damping fluid filled therein is fixed at a set value, or may be an electronic shock absorber in which the damping force of the damping fluid filled therein may be actively adjusted.

Both ends of the strut 700 may be connected to the knuckle 110 and the first steering body 610, respectively. The longitudinal direction of the strut 700 may be arranged parallel to the central axis C2 of the second steering body 620. The central axis of the strut 700 may be arranged coaxially with the central axis C2 of the second steering body 620. As the central axis C2 of the second steering body 620 is arranged offset relative to the central axis C1 of the wheel W, the strut 700 may not be arranged to directly face the central axis C1 of the wheel W but may be spaced a predetermined distance apart from the central axis C1 of the wheel W. Accordingly, the strut 700 may free up installation space for the drive member 500 extending from the first motor 300.

The corner module apparatus 1 according to the present embodiment may further include a suspension arm 800 and a stabilizer bar 900.

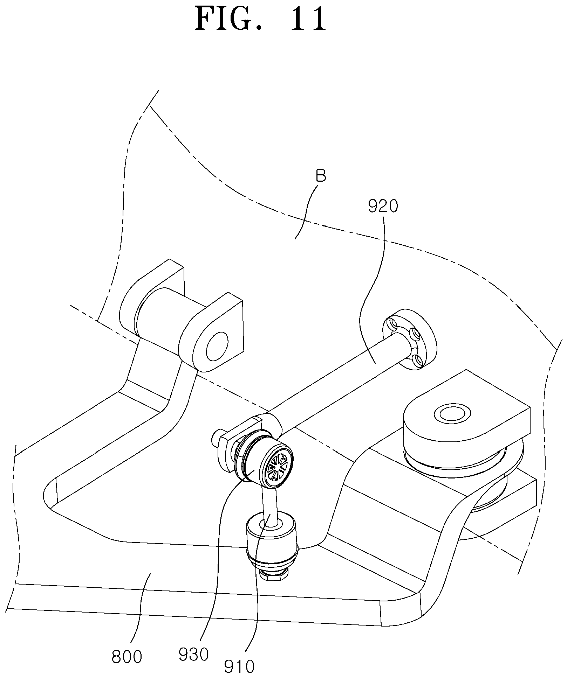

FIG. 11 is an enlarged view schematically showing a configuration of a suspension arm and a stabilizer bar according to an embodiment of the present disclosure.

Referring to FIGS. 2 to 11, the suspension arm 800 may support a hub 100 relative to a vehicle body B. The suspension arm 800 may be configured to function to connect the hub 100 to the vehicle body B, absorb loads from a wheel W during the vehicle's driving due to the suspension arm's own rigidity, and control the movement of the wheel W.

The suspension arm 800 according to the present embodiment may be arranged between the vehicle body B and the hub 100, more specifically, a knuckle 110. Both ends of the suspension arm 800 may be arranged to face the vehicle body B and the knuckle 110, respectively.

One end of the suspension arm 800 may be rotatably connected to the vehicle body B via components such as a bushing. Accordingly, the suspension arm 800 may enable suspension operation by rotating relative to the vehicle body B during bump and rebound movements of the wheel W.

The other end of the suspension arm 800 may be rotatably connected to the bottom of the knuckle 110. In this case, the other end of the suspension arm 800 may be connected to the bottom of the knuckle 110 via a ball joint, allowing for multi-axis rotation. Accordingly, the suspension arm 800 may not only guide the bump and rebound movements of the wheel W but also facilitate a natural steering action of the wheel W.

The stabilizer bar 900 may be connected to the vehicle body B and the suspension arm 800. The stabilizer bar 900 may be configured to function to improve the grip of the wheel W and reduce rolling by partially restraining the bump and rebound movements of the wheel W through the stabilizer bar's own rigidity during vehicle cornering or driving on uneven surfaces.

The stabilizer bar 900 according to the present embodiment may include a first link 910 connected to the suspension arm 800, a second link 920 connected to the vehicle body B, and a link joint 930 arranged between the first link 910 and the second link 920, which rotatably supports the first link 910 and the second link 920 relative to each other. However, the stabilizer bar 900 is not limited to this configuration. It is also possible for the first link 910 and the second link 920 to be directly connected without a link joint 930.

An operation of a corner module apparatus 1 according to an embodiment of the present disclosure will be described below.

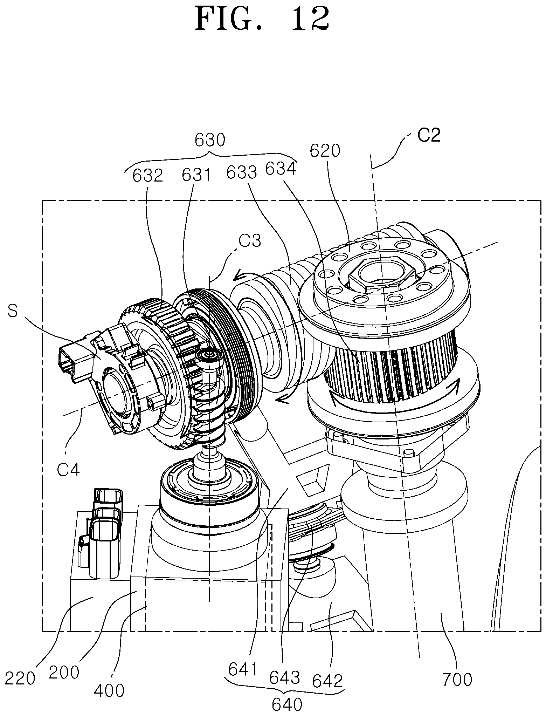

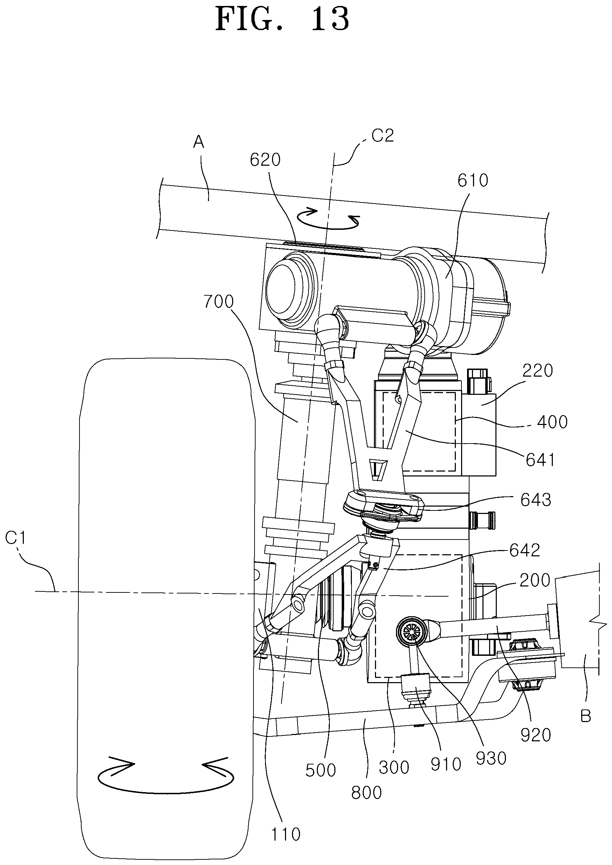

FIGS. 12 and 13 are views schematically showing an operation state of a corner module apparatus according to an embodiment of the present disclosure.

Referring to FIGS. 1 to 13, when a vehicle is driven, a first motor 300 generates rotational force due to a driver's pedal input.

The rotational force generated by the first motor 300 is transmitted sequentially through a first connection 520, a drive shaft 510, and a second connection 530 to a wheel bearing 120.

The wheel bearing 120 rotates around a central axis C1 of a wheel W due to the rotational force received from the second connection 530.

Thereafter, as the wheel W connected to the wheel bearing 120 rotates around the central axis C1 of the wheel W with the wheel bearing 120, the vehicle moves forward or backward.

During the vehicle's steering action, a second motor 400 generates rotational force in response to the driver's steering wheel maneuvers.

The rotational force generated by the second motor 400 is transmitted sequentially through a first worm gear 631 and a first worm wheel 632 to a second worm gear 633, and the second worm gear 633 rotates around a central axis C3 of the first worm wheel 632.

As a second worm wheel 634, engaged with the second worm gear 633, is integrally fixed to a second steering body 620, the second worm gear 633 revolves around the circumferential surface of the second worm wheel 634, centered on a central axis C2 of the second steering body 620.

The rotational force resulting from the revolutions of the worm gear 633 is transmitted sequentially through the first worm gear 631, the first worm wheel 632, the second motor 400, and a main body 200 to a first steering body 610, and the first steering body 610 rotates around the central axis C2 of the second steering body 620 with the main body 200.

Thereafter, the rotational force of the first steering body 610 is transmitted to a knuckle 110 through a torque link 640, causing the wheel W connected to the knuckle 110 to rotate around the central axis C2 of the second steering body 620.

Although embodiments of the present disclosure have been described with reference to the accompanying drawings, these embodiments are for illustrative purposes only, and those skilled in the art will appreciate that various modifications and other equivalent embodiments can be made from these embodiments disclosed herein.

Thus, the true technical scope of the present disclosure should be defined by the following claims.

## Claims

1. A corner module apparatus, comprising:
a hub connected to a wheel;
a main body spaced apart from the hub;
a first motor arranged inside the main body;
a second motor arranged inside the main body and spaced apart from the first motor;
a drive member configured to be connected to the first motor and the hub and provide driving force to the wheel; and
a steering member configured to be connected to the second motor and the hub and adjust a steering angle of the wheel.

2. The corner module apparatus of claim 1, wherein
the drive member comprises
a drive shaft arranged between the first motor and the hub;
a first connection arranged on one side of the drive shaft and connected to the first motor; and
a second connection arranged on the other side of the drive shaft and connected to the hub.

3. The corner module apparatus of claim 2, wherein the first connection and the second connection are rotatably connected to the drive shaft.

4. The corner module apparatus of any one of claims 1 to 3, wherein
the steering member comprises
a first steering body fixed to the main body;
a second steering body configured to be fixed to a vehicle body and rotatably support the first steering body;
a transmission gear configured to be connected to the second motor and rotate the first steering body relative to the second steering body; and
a torque link configured to be connected to the first steering body and the hub and transmit rotational force of the first steering body to the hub.

5. The corner module apparatus of claim 4, wherein
the transmission gear comprises
a first worm gear arranged inside the first steering body and connected to the second motor;
a first worm wheel engaged with the first worm gear;
a second worm gear configured to rotate with the first worm wheel; and
a second worm wheel fixed to the second steering body and engaged with the second worm gear.

6. The corner module apparatus of claim 5, wherein a central axis of the first worm gear and a central axis of the first worm wheel are arranged to intersect with each other.

7. The corner module apparatus of claim 5 or 6, wherein a central axis of the second worm wheel is arranged coaxially with a central axis of the second steering body.

8. The corner module apparatus of any one of claims 5 to 7, wherein the second worm gear rotates around a central axis of the first worm wheel and revolves around a central axis of the second worm wheel.

9. The corner module apparatus of any one of claims 4 to 8, wherein
the torque link comprises
a first transmission link connected to the first steering body;
a second transmission link connected to the hub;
a transmission joint configured to be arranged between the first transmission link and the second transmission link and rotatably support the second transmission link relative to the first transmission link.

10. The corner module apparatus of claim 9, wherein the first transmission link is rotatably connected to the first steering body.

11. The corner module apparatus of any one of claims 4 to 10, further comprising a strut connected to the hub and the first steering body and arranged flexibly along a central axis of the second steering body.

12. The corner module apparatus of claim 11, wherein the central axis of the second steering body and a central axis of the wheel are arranged offset from each other.

13. The corner module apparatus of any one of claims 1 to 12, further comprising a suspension arm configured to be arranged between a vehicle body and the hub and support the hub relative to the vehicle body.

14. The corner module apparatus of claim 13, further comprising a stabilizer bar connected to the vehicle body and the suspension arm.

15. The corner module apparatus of any one of claims 1 to 14, further comprising an insulator fixed to the main body and arranged between the first motor and the second motor.
